Europäisches Patentamt

European Patent Office

Office européen des brevets

(19)

(11) **EP 1 362 631 A1**

## (12) EUROPEAN PATENT APPLICATION
published in accordance with Art. 158(3) EPC

(43) Date of publication:
**19.11.2003 Bulletin 2003/47**

(21) Application number: **02710507.1**

(22) Date of filing: **05.02.2002**

(51) Int Cl.7: **B01D 53/24**

(86) International application number:
**PCT/JP02/00929**

(87) International publication number:
**WO 02/068094 (06.09.2002 Gazette 2002/36)**

(84) Designated Contracting States:
**DE FR GB**
Designated Extension States:
**AL LT LV MK RO SI**

(30) Priority: **23.02.2001 JP 2001049149**

(71) Applicant: **JAPAN SCIENCE AND TECHNOLOGY CORPORATION**
**Kawaguchi-shi, Saitama 332-0012 (JP)**

(72) Inventors:
• **NISHIDA, Yasushi**
**Utsunomiya-shi, Tochigi 321-3236 (JP)**

• **NAGASAWA, Takeshi**
**Ashikaga-shi, Tochigi 326-0141 (JP)**
• **YUGAMI, Noboru**
**Utsunomiya-shi, Tochigi 320-0003 (JP)**
• **ITO, Hiroaki**
**Moka-shi, Tochigi 321-4361 (JP)**

(74) Representative: **Hofer, Dorothea, Dipl.-Phys. et al**
**Prüfer & Partner GbR**
**Patentanwälte**
**Harthauser Strasse 25 d**
**81545 München (DE)**

## (54) SEPARATING APPARATUS

(57)     A gas decomposition / separation device 100 is made up of three sections: a discharge section 110, a compression section 130, and a separation section 140. The discharge section 110 is a section for decomposing gas through discharging. The discharge section 110 is made up of a discharging electrode 120 and a flange pipe 112 that accommodates it.

The compression section 130 is prepared to decrease the velocity of the flow of the gas, which is decomposed by the discharge section 110, and then increase the velocity thereof for the next separation section 140. The separation section 140 separates a plurality of gasses into two categories based on the weights thereof by utilizing the centrifugal force to the gas generated by a claw 142.

Fig. 1

EP 1 362 631 A1

# Description

## TECHNICAL FIELD

The present invention relates to a gas separation device, which separates a gas mixture made from a variety of gases.

## BACKGROUND ART

Chemical and physical methods selected by taking their characteristics into account are used to separate gas components. To industrially separate a large amount of gas components, a large plant that performs liquefying and distillation or the like is used. However, there is a problem with such a large plant that it has to accommodate highly pressurized gas facilities, and the possible place to deploy them is limited. Moreover, there is a problem with the processes such as for liquefying and distillation that the dry process cannot cover all those processes.

## DISCLOSURE OF INVENTION

An objective of the present invention is to provide a gas separation device without the above-mentioned problems.

To attain the above-mentioned objective, the present invention provides a gas separation device that is characterized by comprising: a helical claw deployed on the inside of a cylinder; an internal pipe, which is used for extraction from the center region of the cylinder; and an extraction unit, which takes out from the non-center region of the cylinder; wherein gas is jetted to the internal space of the cylinder; thus the gas is rotated by the claw, light molecules shift toward the center region, heavy molecules shift toward the non-center region due to the difference in the rotation radiuses of gas molecules, which emanates from the difference in the masses of gas constitutional materials; and as a result the gas constitutional molecules are separated.

The present invention further provides a gas decomposition / separation device that is characterized by comprising: a gas separation device, a discharge section, which decomposes gas through discharging; and a compression section, which compresses gas from the discharge section and then jets it out to the gas separation device, which then decomposes and separates the inpoured gas.

Furthermore, a configuration where: gas decomposition / separation devices are multi-stage cascade connected; and gas from the take out section of the gas decomposition / separation device at the very last stage is poured to the first stage, allows highly efficient gas decomposition and separation. Moreover, by connecting a second device including a decomposition section that uses discharging and a filter to an inner pipe of the gas decomposition device of each cascade-connected stage, gas from the inner pipe of the gas decomposition / separation device of each cascade-connected stage is decomposed through discharging, and then taken out via the filter.

## BRIEF DESCRIPTION OF DRAWINGS

FIG. 1 shows a configuration of a gas decomposition/ separation device;
FIG. 2 shows a configuration of an electrode of a discharge section shown in FIG. 1;
FIG. 3 shows the centrifugal force that affects molecules;
FIG. 4 shows a relationship between the centrifugal force and velocity;
FIG. 5 shows the internal partial pressure distribution of the separation section shown in FIG. 1;
FIG. 6 shows a configuration of a gas decomposition/ separation device with a two-stage structure; and
FIG. 7 shows a configuration of Section II of FIG. 6.

## BEST MODE FOR CARRYING OUT THE INVENTION

An embodiment of the present invention is explained with reference to drawings.

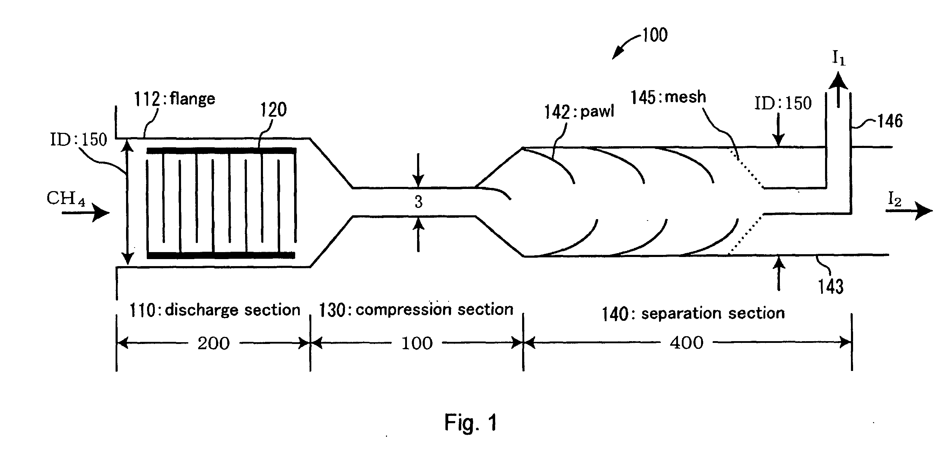

FIG. 1 shows an entire configuration of a gas decomposition/ separation device 100.

As shown in FIG. 1, the gas decomposition/ separation device 100 is made up of three sections: a discharge section 110, a compression section 130, and a separation section 140. The discharge section 110 is a section that decomposes an organic gas or the like through discharging. The discharge section 110 is made up of en electrode 120, which discharges, and a flange pipe 112, which accommodates it.

The compression section 130 is prepared to decrease the flow speed of the gas decomposed by the discharge 110 and increase the flow speed for the next separation section 140. The separation section 140 separates multiple gasses into two categories based on weight by utilizing the centrifugal force due to the pawl 142 that affects the gas. The operation of these sections is described in detail below.

It is noted that the measurements shown in FIG. 1 are only an example and the unit for them is mm. The cylindrical pipe or the like in each section is made of stainless steel (SUS).

<Discharge section>

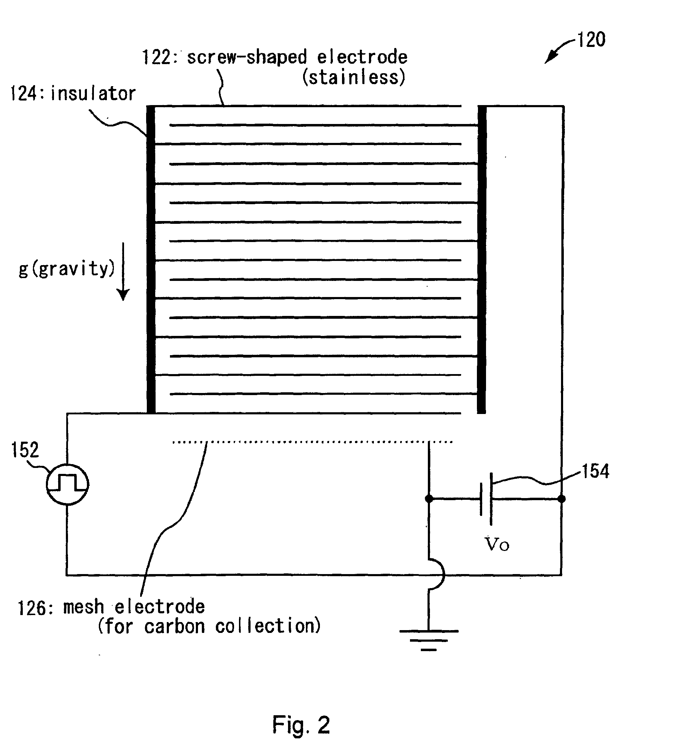

Referring FIG. 1, a gas mainly made from, for example, methane $(CH_4)$ is introduced to the gas decomposition/ separation device 100, and then decomposed into hydrogen $(H_2)$ and carbon (C) through discharging. The operation of the discharge section 110 is described in detail with reference to FIG. 2.

FIG. 2 shows in detail a configuration of the electrode 120 in the discharge section 110 of FIG. 1. The electrode in FIG. 2 has a configuration where two opposing electrodes are combined. In each electrode, a plurality of screw-shaped stainless electrodes 122, which are deployed at almost the same intervals, protrude from a plain and rectangular insulator 124. Each screw-shaped electrode 122 is electrically insulated. A pulse electrode 120 is connected to each of the screw-shaped electrodes, which are arranged at opposing angles on the opposing electrodes. A mesh electrode 126 is deployed under the discharging electrodes. A DC power supply 154 supplies a negative bias voltage ($V_0$) to the screw electrodes 122 relative to the mesh electrode 126.

With this configuration, a pulse voltage is applied to the screw electrodes 122 from the pulse source 152 so that discharging occurs between the electrodes, thereby dissolving the methane ($CH_4$) gas into hydrogen ($H_2$) and carbon (C). This discharging occurs between the screw-shaped electrodes.

The carbon particles dissolved from the methane gas is removed at this discharge section by falling them down as many as possible due to their own weights. To accomplish this operation, the bias voltage to the mesh electrode 126 is adjusted so as for the voltage difference, which guides the carbon particles downward, to become an optimal value.

To facilitate dissolving of the methane into hydrogen and carbon, dividing the discharge section into a plurality of subsections may be effective. Also, increasing the pulse frequency and electric current amount applied to the screw-shaped electrodes up to an extent where an arc-discharging does not occur is effective.

The mixed gas including hydrogen that has been generated at the discharge section 110 is guided to the separation section 140 via the compression section 130.

<Compression section>

The compression section 140 is configured with a pipe whose center region is narrowed down. The mixed gas made of different gasses flows through a pipe that is a nozzle, which increases the linear velocity of the gas flow.

The compression section 130 can decrease the velocity of the flow of the mixed gas (whose primary component is $CH_4$) transferred from the discharge section, and increase the flow velocity within the separation section 140. The mixed gas from the compression section 130 is jetted to the cylinder-shaped space that comprises the separation section 140. At this time, carbon has been left as fine particles.

<Separation section>

The separation section 140 has auxiliary helical (spiral) wings (claws)142 on the periphery, which give a rotation force to the gassy fluid. Once the rotation force is given to the mixed gas by these helical claws 142, the difference in the radiuses of gyration of the gas particles due to the difference in the masses of the gas constitutional materials causes the heavy particles to shift to the non-center region and the light particles to shift to the center region, and as a result the gas constitutional particles are separated. The rear of the separation section 140 is a duplex pipe structure, and an inner pipe 146 is connected to the inner side of the outer cylinder 143 via the mesh structure 145. Gas I, is taken out from the center region of the cylinder 143 via the inner pipe 146.

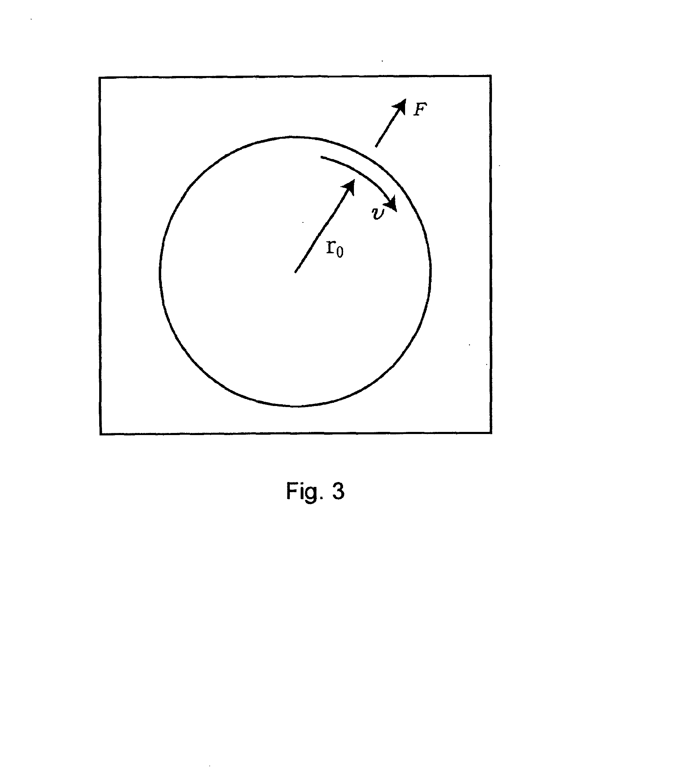

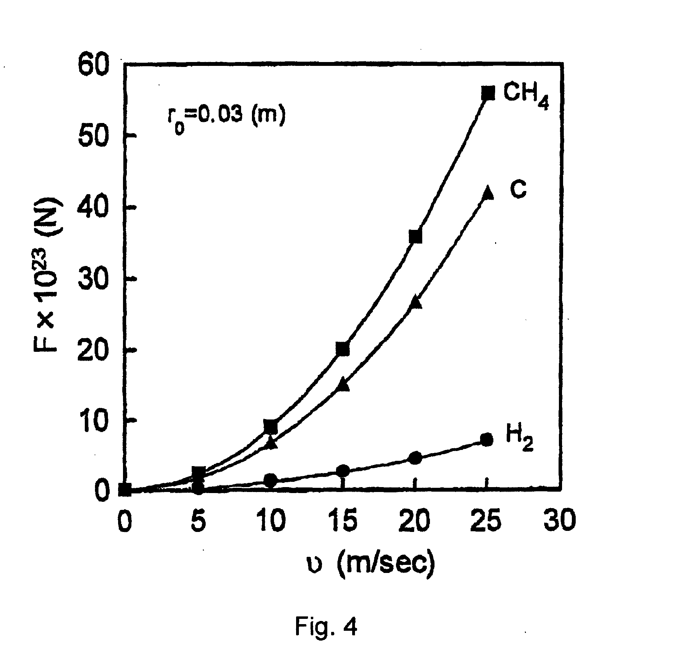

The principle of separating by this separation section 140 is explained using FIGs. 3 and 4.

To begin with, the spiral craws 142 cause the mixed gas to rotationally flow. FIG. 3 shows dynamics relevant to the mixed gas.

As shown in FIG. 3, centrifugal force F occurs on the gas that rotates at velocity v with a radius $r_0$. At this time, centrifugal forces Fm, FH, and Fc are given to methane, hydrogen, and carbon, respectively, as shown in the following equations. Note that $m_m$, $m_H$, and $m_c$ denote masses for each molecule.

$$F_m = m_m V^2 / r_0$$

$$F_H = m_H V^2 / r_0$$

$$F_c = m_c V^2 / r_0$$

The ratios of these centrifugal forces to that for the hydrogen are shown below.

$$F_m / F_H \cong m_m / m_H \cong (12 + 4) / 2 = 8$$

$$F_c / F_H \cong m_m / m_H \cong 12 / 2 = 6$$

Therefore, methane ($CH_4$) and carbon (C) may receive the centrifugal force, which is six to eight times that to hydrogen. FIG. 4 is a graph showing the relationship between the centrifugal force that each module receives and the velocity.

It is apparent from FIG. 4 that the greater the velocity, the greater the difference in the centrifugal forces to the light gas molecules ($H_2$) and the heavy molecules (C and $CH_4$), respectively. According to this, the light gas molecules ($H_2$) shift toward the center of the separation section 140, and the heavy gas molecules

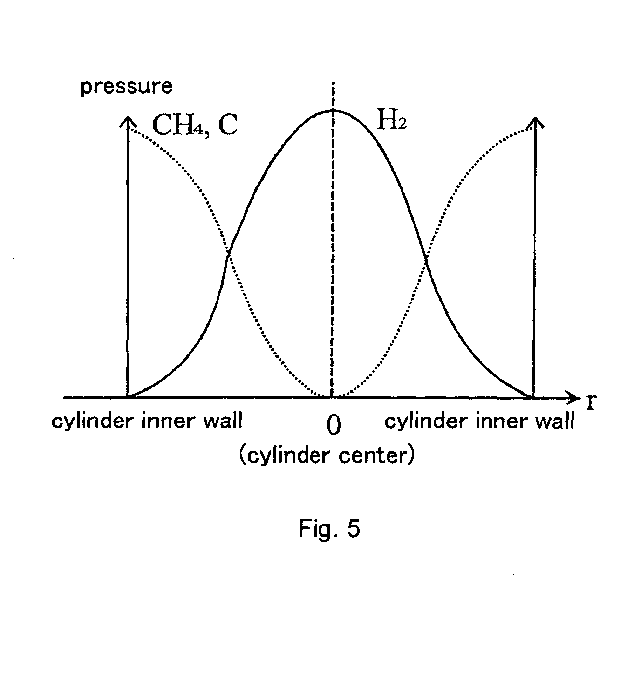

(CH$_4$) shift toward the non-center region. As a result, the respective partial pressures are shown in FIG. 5. FIG. 5 shows the partial pressures in the cylinder innerside of the separation section 140. A center O is of the cylinder 143 that configures the separation section 140, and there are inner walls in the cylinder 143 at equal intervals. As shown in FIG. 5, between each inner side, a high density of hydrogen exists in the center region, and a high density of methane or carbon exists in the non-center region.

Therefore, in FIG. 1, in order to take out the gas only in the center region of the cylinder 143 from the end of the separation section 140, the inner pipe 146 is prepared via the mesh structure 145. A high density of the gas components of hydrogen that is a light molecule when separated as I$_1$, is obtained from the inner pipe 146.

<Multi-stage connection>

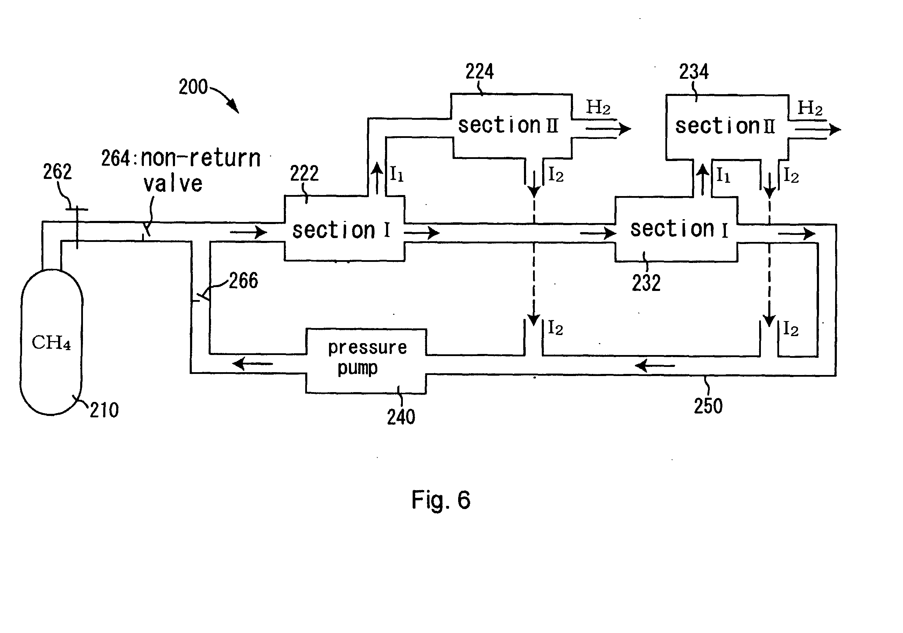

FIG. 6 shows a configuration of a gas decomposition / separation device, which has the two-stage connected unit shown in FIG. 1. Sections I 222 and 232 are the unit shown in FIG. 1. Methane gas is sent from a gas cylinder 210 to each of the sections I 222 and 232. A high density of hydrogen gas is seized at the center I1 of each of the sections I 222 and 232, and then sent to the sections II 224 and 234.

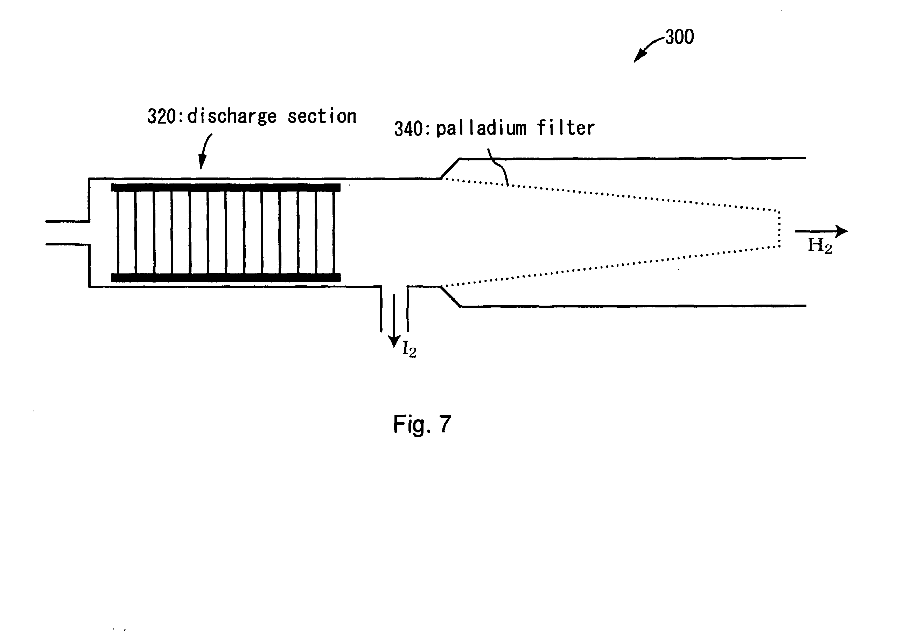

FIG. 7 shows a configuration of the section II. The section II is configured from a discharge section 320 and a palladium filter 340. The discharge section 320, which is the same configuration as the discharge section 110, decomposes the remaining methane gas so as to generate hydrogen. The palladium filter 340 is a transparent film made of palladium or a palladium- silver (Ag) alloy, and lets only hydrogen pass through. In section II, through the decomposition process of the discharge section 320 and then the palladium filter 340 a pure hydrogen gas is obtained.

A low density of hydrogen gas I$_2$ is gathered from the non-center region of the section I 232 and the sections II 224 and 234, pressured by a pressure pump 240, and then given again to the first-stage of the section I 222. In such a manner, the decomposing and separating is repeatedly performed.

Note that FIG. 6 shows a two-stage cascade connected configuration example; alternatively, three or more-stage cascade connection is also available.

<Embodiment>

An embodiment of the two-stage cascade connected device shown in FIG. 6 is explained below.

Methane gas that was filled in a normal grade was given from the gas cylinder 210 to the inlet of the first stage 222 of the section I at a rate of 200 ml/sec. When the gas in the 1 cm diameter center region of the first stage 222 in the section I was taken out, its compositional ratio of hydrogen to methane was found to be 80:20. The compositional ratio of hydrogen to methane included in the taken-out gas from the second stage 232 in the section I was found to be 95:5. A highly refined hydrogen gas, which is given from a Pd-Ag transparent film 340, is provided from each of the sections II 224 and 234.

(Industrial utilization)

The separation method according to the present invention is beneficial for separating and/ or refining a large amount of gas since the greater the flow velocity, the greater the separatability.

**Claims**

1. A gas separation device, comprising:

   a helical claw deployed on the inside of a cylinder;
   an internal pipe, which is used to take out from the center region of the cylinder; and
   a take out unit, which takes out from the non-center region of the cylinder; whereby gas is jetted to the internal space of the cylinder, and the gas is rotated by the claw so that light molecules shift toward the center region, and heavy molecules shift toward the non-center region due to the difference in the rotation radiuses of gas molecules, which emanates from the difference in the masses of gas constitutional materials; resulting in separating the gas constitutional molecules.

2. A gas decomposition/separation device, comprising:

   a gas separation device, according to claim 1;
   a discharge section, which decomposes gas through discharging; and
   a compression section, which compresses gas from the discharge section and then jets it out to the gas separation device;

   wherein inpoured gas is decomposed and separated.

3. A gas decomposition/separation device, comprising a configuration where: gas decomposition/separation devices, according to claim 2, are connected in a multi-stage cascade manner; and gas from the take out section of the gas decomposition/separation devices at the very last stage is poured to the first stage; wherein gas decomposition and separation are performed highly efficiently.

**4.** The gas decomposition/separation device, according to claim 3, wherein: a second device including a decomposition section that uses discharges and a filter is connected to an inner pipe of the gas decomposition device of each cascade-connected stage; and gas from the inner pipe of the gas decomposition/separation device of each cascade-connected stage is decomposed through discharging, and then taken out via the filter.

Fig. 1

EP 1 362 631 A1

124: insulator

122: screw-shaped electrode
(stainless)

120

g(gravity)

152

154

Vo

126: mesh electrode
(for carbon collection)

Fig. 2

Fig. 3

Fig. 4

Fig. 5

Fig. 6

320: discharge section

340: palladium filter

300

$H_2$

$I_2$

Fig. 7

EP 1 362 631 A1

EP 1 362 631 A1

## INTERNATIONAL SEARCH REPORT

| International application No. |
|---|
| PCT/JP02/00929 |

**A. CLASSIFICATION OF SUBJECT MATTER**
Int.Cl⁷ B01D53/24

According to International Patent Classification (IPC) or to both national classification and IPC

**B. FIELDS SEARCHED**

Minimum documentation searched (classification system followed by classification symbols)
Int.Cl⁷ B01D53/24, B01D53/32, B04C3/00

Documentation searched other than minimum documentation to the extent that such documents are included in the fields searched
Jitsuyo Shinan Koho          1926–1996     Toroku Jitsuyo Shinan Koho     1994–2002
Kokai Jitsuyo Shinan Koho    1971–2002     Jitsuyo Shinan Toroku Koho     1996–2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | EP, 0496128, A1 (Stork Product Engineering B.V.), 25 January, 1991 (25.01.91), Full text (Family: none) | 1 |
| Y | JP, 60-051528, A (Kiyoyuki HORII), 23 March, 1985 (23.03.85), Full text (Family: none) | 1 |
| Y | JP, 11-028389, A (Mitsubishi Heavy Industries, Ltd.), 02 February, 1999 (02.02.99), Full text (Family: none) | 1 |
| A | JP, 07-132247, A (Toshiba Corp.), 23 May, 1995 (23.05.95), (Family: none) | 2-4 |
| P,A | JP, 2001-096128, A (Mitsubishi Electric Corp.), 10 April, 2001 (10.04.01), (Family: none) | 2-4 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 March, 2002 (12.03.02) | 02 April, 2002 (02.04.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

13